Europäisches Patentamt

European Patent Office

Office européen des brevets

(19)

(11) **EP 1 302 697 A2**

(12) **EUROPEAN PATENT APPLICATION**

(43) Date of publication:
   **16.04.2003 Bulletin 2003/16**

(51) Int Cl.⁷: **F16H 3/12**, F16H 61/04

(21) Application number: **02006690.8**

(22) Date of filing: **27.03.2002**

(84) Designated Contracting States:
   **AT BE CH CY DE DK ES FI FR GB GR IE IT LI LU
   MC NL PT SE TR**
   Designated Extension States:
   **AL LT LV MK RO SI**

(30) Priority: **09.10.2001 JP 2001311688**

(71) Applicant: **Hitachi, Ltd.**
   **Chiyoda-ku, Tokyo 101-8010 (JP)**

(72) Inventors:
   • **Ibamoto, Masahiko**
     **Hitachinaka-shi, Ibaraki 312-0044 (JP)**
   • **Kuroiwa, Hiroshi**
     **Ibaraki 316-0025 (JP)**

(74) Representative: **Beetz & Partner Patentanwälte**
   **Steinsdorfstrasse 10**
   **80538 München (DE)**

(54) **Automatic transmission, controller apparatus and automobile**

(57)     When conducting power-on shift by a clutch-to-clutch in an automatic transmission (48), friction control is unstable, and theoretically, torque transition is impossible when gear is downshifted. Also, so-called skip shift, i.e., the transmission between the transmission gears on the same clutch shaft cannot be done. Conducting active transmission by means of a motor (30) enables up-shift and/or down-shift and also a torque transit transmission, as well as, enables the skip shift, as a practical application thereof. The torque of a first input shaft is transferred to a second input shaft, contemporarily, by means of the motor (30), and during this, gears of the first input shaft are exchanged.

FIG. 2

EP 1 302 697 A2

**Description**

BACKGROUND OF THE INVENTION

The present invention relates to an automatic transmission for use in an automobile, and a control method thereof.

Conventionally, in the automatic transmission is used a transmission mechanism of a planetary gear type or a parallel shaft type, and commonly is applied a method for transmitting by selectively connecting or jointing clutches, which are provided on gear stages, separately, being different in the transmission ratio thereof, as was described in Japanese Patent Laid-open No. Hei 10-89456 (1998), for example.

A result of analysis made upon such the conventional art as was mentioned in the above is as follows. However, this analysis result does not describe nor mention about the conventional art as it is, but it rather describe the result of analysis, so far as it concern.

In conducting shift-up, when torque transmission power goes up gradually under partial connecting condition after starting the connecting or jointing to a next position clutch, so-called torque transition occurs, where the transmission torque at the pre-position comes down gradually, on a while, so-called revolution speed transition occurs in an inertia phase if a pre-position clutch is disconnected, when all the torque is transferred to the next position clutch, where the engine revolution speed comes down toward an input revolution speed of the next-position gear.

In conducting shift-down, however, the torque transition cannot be achieved, theoretically, thus, from a higher stage gear having a lower energy potential to a lower stage gear having a higher energy potential, even if the transmission torque on the next position clutch is increased up. Therefore, the revolution speed transition is carried out in the beginning, where the engine revolution speed goes up by sliding the pre-position clutch, and thereafter the torque transition is conducted by exchanging the clutches at the time when the next-clutch comes in synchronism with.

In such the transmission control as according to the conventional art, the torque transition in the torque phase and/or discharge of inertial energy in the inertia phase are/is conducted by means of the friction control of clutches. However, since such the method causes damage on the clutch plate due to the friction thereon, thereby bringing about a drawback that the life of the clutch is shortened. Also, with this method, increase/decrease of the torque transmission power is achieved and/or adjusted through the friction power, however the friction power has a negative resistance characteristic with respect to the sliding speed. Therefore, it is very difficult to control the torque transmission power at a predetermined value with stability, then sometimes causing gear-change shock with occurring judder, and further, in serious cases, wearing down the clutch plate into a wave-like form, to be damaged or broken.

In particular, in the shift-down operation, in which an accelerator pedal is depressed, so as to obtain acceleration, since it is theoretically impossible to conduct the torque transition in beginning, then unwillingly, the torque transition is conducted after conduction of an adjustment on the revolution speed and connection of the clutch to the lower-speed stage in advance. Therefore, a response in time, i.e., from the time of the acceleration to the time when toque comes out, comes to be slow, thereby bringing about inferiority in drivability.

SUMMARY OF THE INVENTION

Accordingly, an object of the present invention is, for dissolving such the drawbacks mentioned above, to provide an automatic transmission system for use in an automobile, enabling also electromotive traveling and regenerative braking, while achieving smooth transmission control of good responsibility, without relying upon the friction.

According to the present invention, for accomplishing such the object as mentioned above, there is provided a first motive force transmission route for transmitting motive force of an internal combustion engine to a drive shaft through a first clutch and a first transmission gear; a second motive force transmission route for transmitting the motive force of said internal combustion engine to the drive shaft through a second clutch and a second transmission gear; and/or motor for transmitting torque to an output shaft of said first clutch and an output shaft of said second clutch, respectively and relatively, wherein torque transition when changing gears is carried out by torque generated by the motor while revolution speed transition in an inertial phase by revolution speed control of the motor, thereby achieving the transmission control in smooth and with good responsibility, but without relaying upon friction control of the clutches.

BRIEF DESCRIPTION OF THE DRAWINGS

Fig. 1 is a conception view showing the structure of an automobile, in which a transmission is installed, according to the present invention.

Fig. 2 is a structure view showing the structure of the transmission according to a first embodiment of the present invention.

Fig. 3 is a principle model showing the structure of the transmission according to the first embodiment of the present invention.

Fig. 4 is a block diagram showing the structure of a motor control for use in the present invention.

Fig. 5 is a motor characteristic views showing changes of the operation point of the motor in the motor control shown in Fig. 4.

Fig. 6 is a flowchart showing the structure of a software for a transmission controller system.

Fig. 7 is a time chart showing changes in the torque and the revolution speed when gear is changed in the transmission controller system shown in the Fig. 6.

Fig. 8 is a flowchart showing the structure of a software for the skip shift controller system according to the present invention.

Fig. 9 is an operational conception view showing a manner of control on torque and revolution speed of the motor, when $1 \rightarrow 3$ skip shift is controlled, according to the present invention.

Fig. 10 is an example of time chart showing changes in the torque and the revolution speed, when the gear is up-shifted $1 \rightarrow 3$, in the skip shift controller system according to the present invention.

Fig. 11 is a motor characteristic view showing the operation points of the motor, in the skip shift control according to the present invention.

Fig. 12 is a principle model showing the structure of the transmission according to a second embodiment of the present invention.

Fig. 13 is an operational conception view showing a manner of control on torque and revolution speed of the motor, when $1 \rightarrow 2$ skip shift is controlled, according to the second embodiment of the present invention;

Fig. 14 is a motor characteristic viewshowing the operation points of the motor, in the motor control shown in the Fig. 12;

Fig. 15 is a principle model showing the structure of the transmission according to a third embodiment of the present invention.

Fig. 16 is an example of time chart showing changes in the torque and the revolution speed, when the gear is down-shifted $3 \rightarrow 1$, in the skip shift controller system according to the present invention.

DESCRIPTION OF THE PREFERRED EMBODIMENTS

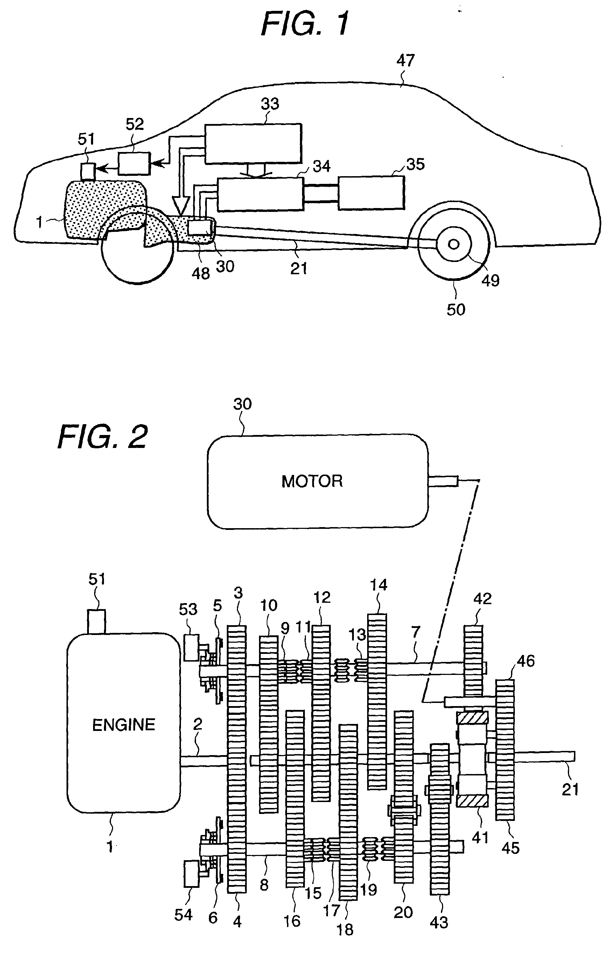

Fig. 1 is the structural view showing a first embodiment according to the present invention, wherein to an engine 1 of an automobile 47 is connected a transmission 48, an output shaft 48 of which drives wheels 50 through a differential gear 49. Within the transmission 48, an electric motor 30 is installed. To that motor 30 is connected a motor controller 34, and also mounted a battery 35 as an electric power source of that motor controller 34.

Within the engine 1 is provided an electronic control throttle valve 51, thereby controlling the engine output by means of requationuest or demand signals.

A transmission controller 33 controls the torque and the revolution speed of the motor 30 through the motor controller 34, and at the same time, it controls an output of the engine 1 through an engine controller 52 and the electronic control throttle valve 51. Also, it gives instructions or commands to shift actuators 26-29 and clutch actuators 53 and 54, which will be mentioned later.

Fig. 2 shows the structure of the transmission 48. An output shaft 2 of the engine 1 is connected to clutches 5 and 6 through clutch connection gears 3 and 4. Those clutches define a so-called twin-clutch, wherein an output of the first clutch 5 is connected to a shaft 7 (hereinafter, a transmission input shaft), an output of the second clutch 6 to a shaft 8 (hereinafter, a transmission assist shaft), respectively. Those clutches 5 and 6 are controlled in connecting or jointing, individually, by means of the clutch actuators 53 and 54, respectively. The clutch actuators 53 and 54 may be any one of a method or type of generating a fluid pressure, an air pressure, or a mechanical suppression power.

Onto the shaft 7 are attached 1st position speed gear 10, 3rd speed gear 12 and 5th speed gear 14, each being freely rotatable thereon, while onto the shaft 8, 2nd gear 16, 4th gear 18 and a back gear 20, also each being freely rotatable thereon. Driven gears of each stage, being meshed or meshed with those transmission gears 10, 12, 14, 16, 18 and 20, are disposed or positioned on an output shaft 21 (hereinafter, an counter shaft). Onto the transmission gears 10, 12, 14, 16, 18 and 20 are attached dog-clutches 9, 11, 13, 15, 17 and 19, each having a synchronized meshing mechanism therein, thereby to be connected with each shaft. Each of the dog-clutches 9, 11, 13, 15, 17 and 19 can be slid toward an aimed or targeted gear by means of a shift fork thereof, thereby to be meshed or meshed with. The shift forks are driven by means of the shift actuators. The shift actuators may drive each of the dog-clutches, individually, or side it by one shift actuator through selecting the aimed shift fork by means of an selective mechanism.

Such the automatic transmission of the twin-clutch type is already known, and that having similar structure was disclosed in Japanese Patent Laid-open No. Hei 10-89456 (1998), though being different from in an arrangement of gears and positions of the dog-clutches. However, with this mechanism, the gear-shift is conducted by only the friction control of the clutches, at the last.

According to the present embodiment, it is characterized in that a motor 30 is connected between the shafts 7 and 8, i.e., applying torque generated by the motor 30 to the shafts 7 and 8, relatively. Thus, the rotating motor functions to rotate those shafts, in reversed direction to each other. According to the present embodiment, in which a planetary gear 41 is applied to, the ring gear is connected to a connection gear 42 of the shaft 7 while the sun gear to a connection gear of the shaft 8, and the carrier is connected to the motor 30. With doing so, due to the torque of the motor 30, the shafts 7 and 8 are twisted into the directions opposite to each other. By setting a gear ratio of each of those connection gears as below, the revolution speed of the motor comes to be the difference between those of the shafts 7 and 8.

Assuming that a number of teeth of the sun gear in the planetary gears 41 is Zs; and a number of teeth of the ring gear Zr, then the revolution speed of the carrier of the planetary gear can be expressed by the following equation (Equation 1), in general.

$$Nc=Ns*Zs/(Zs+Zr)+Nr*Zr/(Zs+Zr) \qquad\qquad \text{(Equation 1)}$$

When assuming the connection ratio between the ring gear and the connection gears 42 of the shaft 7 is (-k1), then Nr = -k1N1. When setting the connection ratio between the sun gear and the connection gears 43 of the shaft 8 at (Zr/Zs)k1, then Ns = (Zr/Zs)k1N2. When the carrier is connected to the motor at a speed reduction ratio -{Zr/(Zs+Zr)}k1, in reversed rotation direction, then Nc = -Nm*Zr/(Zs+Zr)k1.

Putting those relationships into the equation (Equation 1), the following equation can be obtained:

$$-Nm*Zr/(Zs+Zr)k1 = N2*Zr/(Zs+Zr)k1-N1*Zr/(Zs+Zr)k1 \qquad\qquad \text{(Equation 2)}$$

Accordingly, Nm = N1-N2 can be obtained.

There is other way of applying the differential gear in the place of the planetary gear mentioned above, and the details thereof was explained in Japanese Patent application 2000-285227, which was filed by the same present applicant.

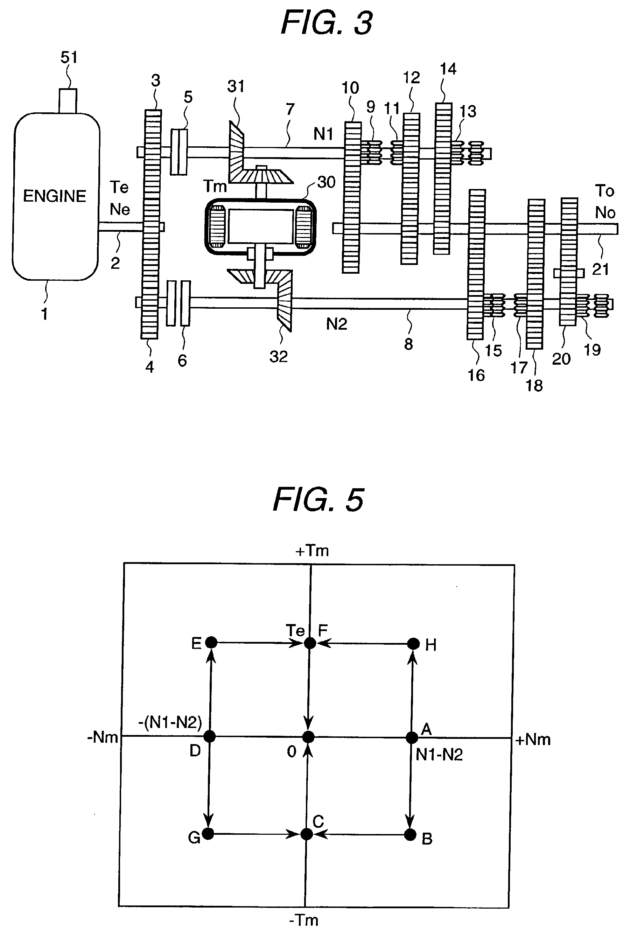

Fig. 3 is a view showing the principle structure of the mechanism shown in Fig. 2 since being difficult to be seen therefrom. Because it is enough to connect the shafts 7 and 8, so that the revolution speed of the motor comes to be the difference between the shafts 7 and 8, they are connected to the rotor and the stator of the motor, directly, by using bevel gears 31 and 32, but the operation thereof is entirely equivalent to that shown in Fig. 2.

Since Fig. 3 is easily understandable, explanation will be given on the principle operation of the present embodiment, by referring to the Fig. 3. According to the present embodiment, the dog-clutches of the transmission gears are connected, except for the time-period during when the automobile is on running, though they are not used so in the conventional art. Assuming that the gear ratios are G1 and G2 when being connected to the both shafts 7 and 8, that the torque of the shaft 7 T1, and that the toque of the shaft 8 T2, then the torque To of the transmission output shaft 21 can be expressed by the following equation (Equation 3):

$$To = G1\times T1+G2\times T2 \qquad\qquad \text{(Equation 3)}$$

In case of running under the condition where the first clutch 5 is fastened or jointed while the second clutch 6 disconnected, the following equation can be established, by assuming that the direction of the torque of the motor 30 is positive in moving from a point B to a point A:

$$T1 = Te+Tm \qquad \text{(Equation 4)}$$

$$T2 = -Tm \qquad \text{(Equation 5)}$$

Then, by inputting those into the equation (Equation. 3), the following equation can be obtains as the output shaft torque To:

$$To = G1Te+(G1-G2)Tm \qquad \text{(Equation 6)}$$

In the case where the first clutch 5 is disconnected while the second clutch 6 fastened, the equations come to be symmetric to the above.

$$T1 = Tm \qquad \text{(Equation 7)}$$

$$T1 = Te-Tm \qquad \text{(Equation 8)}$$

From those, the following equation can be obtained as the output shaft torque To:

$$To=G2Te+(G1-G2)Tm \qquad \text{(Equation 9)}$$

Thus, in addition to the inherent torque, which drives the clutches connected to the engine directly and the output shaft through the transmission gears, torque is superimposed on the output shaft, which can be obtained by multiplying the motor torque by the difference (G1-G2) in the gear ratio. Since the motor torque can be controlled in the positive and in the negative, freely, therefore it is sufficient to select the gear ratio of that, which is not directly connected to the engine, depending upon the purpose, and also to control the polarity and the magnitude of the motor torque depending upon the purpose.

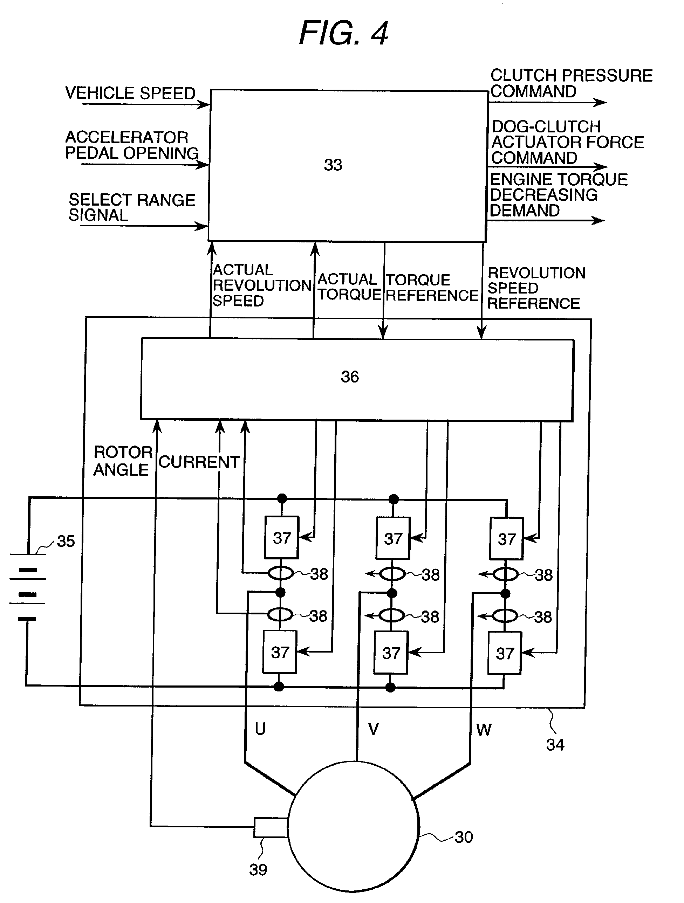

Fig. 4 shows a motor control system. The motor 30, if being a permanent magnet synchronous motor, for example, three phase AC (alternating current) voltages U, V and W are supplied from by means of the motor controller 34. In each arm of the phases of inverter of the motor controller 34 is provided a high-speed switching element or device 37, so that DC (direct current) voltage of the battery 35 is inverted into three-phase voltages of variable frequency. The inverter controller 36 controls a conduction rate of the inverter upon receipt of a torque instruction or command from the transmission controller 33, and feeds back thereto an output of a current sensor 38 for each of arms, as well as, an output of a position sensor for use in an angular detection of the rotor, thereby controlling the torque and the revolution speed of the motor 30 to follow the instruction or command given. Such the control, however, since it is the technology already known in the technical field of electronics, therefore the detailed explanation thereof will be omitted herein.

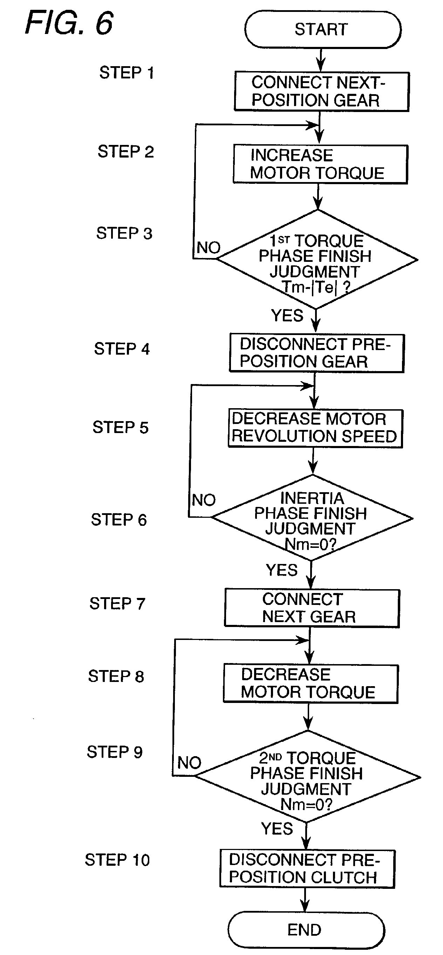

In this manner, by means of the motor controller 34, the torque and the revolution speed of the motor are controlled, in a manner so-called four dimension control, as is shown in Fig. 5. In case of gear-shift 1 ←→ 2, for example, the motor 30 rotates at the revolution speed (N1-N2), being the difference between the revolution speed N1 of the shaft 7 and the revolution speed N2 of the shaft 8 before conducting the gear-shift, however since no torque is generated, the operation point lies at the point A in Fig. 5. As will be mentioned later, if the motor torque is generated for gear-shifting, the operation point shifts or moves to the point B or the point H.

However, it is needless to say that the motor should not be limited to such the permanent magnet synchronous motor, but it may be an induction motor or a DC motor, etc., if being able to achieve such the four (4) dimension control.

Explanation will be given on a method for conducting the transmission control by using the motor. Herein, it is presumed that the motor torque Tm can be generated at the value being equal or higher than the engine torque Te.

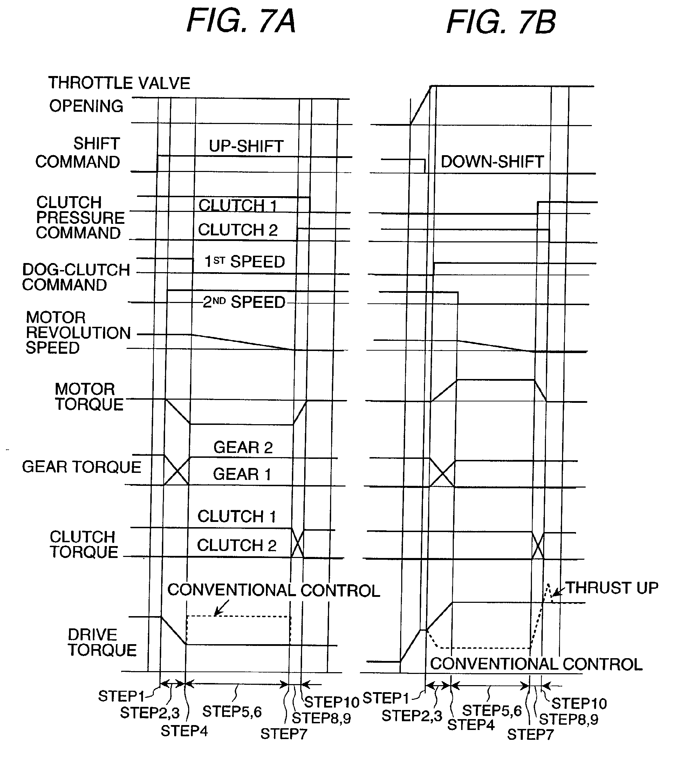

Fig. 6 shows a flowchart of the control system for the purpose of accomplishing the transmission control. Both up-shift and down-shift can be controlled by the same steps. In Fig. 7 are shown time charts for the operations in each of Steps, in particular, in the cases of 1 → 2 up-shift and 2 → 1 down-shift, for example.

In Step 1, in running of the automobile, when the next-position gear is fastened or jointed by actuating the shift actuator of the next-position, the motor 30 rotates idly at the revolution speed of (N1-N2).

When the motor torque is increased up at a predetermined rise-up ratio in the Step 2, thus, when the torque of the shaft (7 or 8) is increased gradually, then the input torque of the next-position gear goes up but the input torque of the pre-position gear goes down. This is the torque transition process, which is so-called by the torque phase. In the cases of the up-shift, 1 → 2 or 3 → 4, the operation point of the motor, just before the transmission or gear-shift, is at the point A in Fig. 5. Since the motor torque is increased in the negative direction, the operation point of the motor moves to the point B. In this instance, according to the (Equation 5), the input torque T2 of the transmission gear 16 or 18 goes up, while the input torque T1 of the transmission gear 10 or 12 goes down according to the (Equation. 4), and then at the point B, they are T1=0 and T2=0 when they reach to the point B, whereby establishing the condition Tm = -Te. In the cases of the up-shift, 2 → 3 or 4 → 5, since N2 > N1, the operation point of the motor, just before the transmission, lies at a point D in Fig. 5. When the motor torque is increased in the positive direction, the operation point of the motor moves to the direction of a pint E. According to the (Equation 7), the input torque T1 of the transmission gear 12 or 14 goes up while the input torque T2 of the transmission gear 16 or 18 goes down according to the (Equation 8), and then at the point E, they are T1 = Te and T2 = 0 when they reach to the point E, whereby establishing the condition Tm = Te. In the cases of the down-shift, 4 → 3 or 2 → 1, the operation point of the motor moves from the point A to the point H. When the motor torque is increased in the positive direction, the input torque T1 of the transmission gear 12 or 10 goes up according to the (Equation 7) while the input torque T2 of the transmission gear 18 or 16 goes down according to the (Equation 8), and then at the point H, they are T1 = Te and T2 = 0 when they reach to the point H, whereby establishing the condition Tm = Te. In the cases of the down-shift, 5 → 4 or 3 → 2, the operation point of the motor moves into the direction from the point D to the point G. When the motor torque is increased in the negative direction, the input torque T2 of the transmission gear 18 or 16 goes up according to the (Equation 5), while the input torque T1 of the transmission gear 14 or 12 goes down according to the (Equation 4), and then at the point G, they are T1 = 0 and T2 = 0 when they reach to the point G, whereby establishing the condition Tm = -Te.

In Step 3, the transmission controller 33 makes an finish judgment of the torque phase. Though it determines whether the input torque of the pre-position gear comes to be zero (0) or not, however in many cases, since the input torque of the pre-position gear cannot be detected directly, therefore in the place thereof, it is possible to consider that the input torque of the pre-position gear = 0 when the effective torque of the motor comes to be equal to the engine torque in the absolute value thereof (i.e., Tm = |Te|). For that purpose, it is necessary to obtain the engine torque Te through detection or calculation thereof, but the detailed method of it was already shown, for example, in Japanese Patent Laid-open Nos. Hei 5-240073 (1993) and Hei 6-317242 (1994), which were filed by the same present applicant, therefore it will be omitted herein.

In Step 4, the transmission controller 33 actuates the shift actuator of the pre-position, thereby to disconnect the pre-position gear. When the pre-position gear is disconnected, the engine revolution speed can be changed.

In Step 5, when the transmission controller 33 generates an instruction or command for motor revolution speed reduction, the engine revolution speed changes toward the input revolution speed of the next-position gear, thus, approaches gradually. This is the process of revolution speed transition, which is called by the inertia phase. In the up-shift, 1 → 2 or 3 → 4, when the motor revolution speed is decreased while keeping torque on the output shaft of next-position shaft, i.e., keeping at Tm = -Te (hereinafter, it is the same), the revolution speed of the shaft 7 goes down. In this instance, the operation point of the motor moves from the point B to the point C in Fig. 5. In the up-shift, 2 → 3 or 4 → 5, when the motor revolution speed is decreased while keeping at Tm = Te, the revolution speed of the shaft 8 goes down. In this instance, the operation point of the motor moves from the point E to the point F. In the down-shift, 4 → 3 or 2 → 1, when the motor revolution speed is decreased while keeping at Tm = Te, the revolution speed of the shaft 8 goes up. In this instance, the operation point of the motor moves from the point H to the point F. In the down-shift, 5 → 4 or 3 → 2, when the motor revolution speed is decreased while keeping at Tm = -Te, the revolution speed of the shaft 7 goes up. In this instance, the operation point of the motor moves from the point G to the point C.

In Step 6, though the transmission controller 33 makes an finish judgment on the inertia phase, but it is decided upon the basis of the fact that the engine revolution speed comes to be equal to that of the input revolution speed of the next-position gear. In the case where the input revolution speed of each gear cannot be detected directly, it may be determined upon the basis of the fact the motor revolution speed Nm comes down to be zero (0).

In Step 7, the transmission controller 33 actuates the clutch actuator, thereby connecting or jointing the next position clutch 5 or 6.

In Step 8, when the transmission controller 33 generates an instruction or command of motor torque reduction, thereby bringing the motor torque down to zero (0), a so-called clutch exchange is conducted, i.e., the engine torque Te, being transmitted through the first clutch 5 or the second clutch 6, is shifted to the clutch on the opposite side. In this instance, the operation point of the motor moves from the point C or F to the point of zero (0) in Fig. 5.

In Step 9, the transmission controller 33 makes the judgment on the end of the second torque phase upon the basis of the fact that the motor torque Tm comes down to zero (0).

In Step 10, the transmission controller 33 actuates the clutch actuator, thereby releasing the pre-position clutch.

The explanation mentioned above was given only on the case where the transmission or gear-shifting is conducted in a proper order; such as, $1 \to 2$, $2 \to 3$, $3 \to 4$, and $4 \to 5$, or on the case where the transmission is conducted between the shafts 7 and 8; such as, $1 \to 4$, $2 \to 5$, $4 \to 1$, and $5 \to 2$, however next, explanation will be given on a case where the transmission is made between the same-shaft, thus, so-called skip shift.

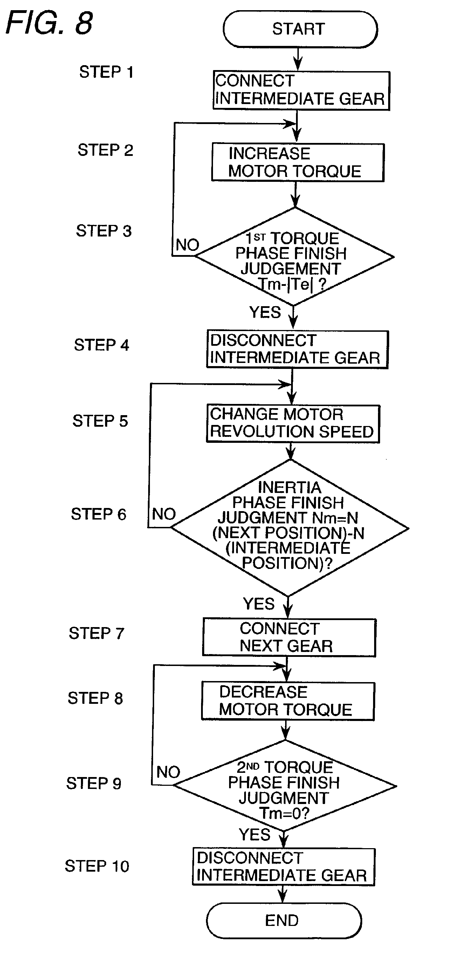

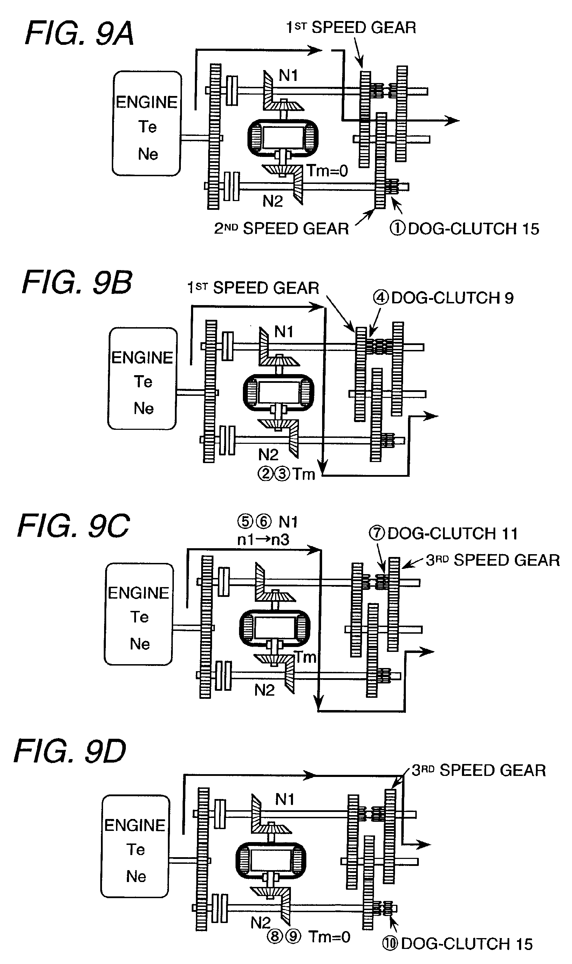

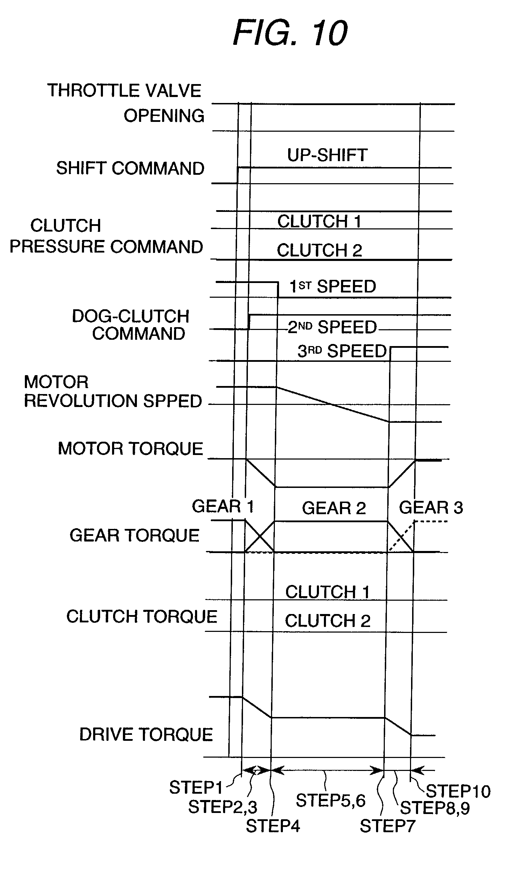

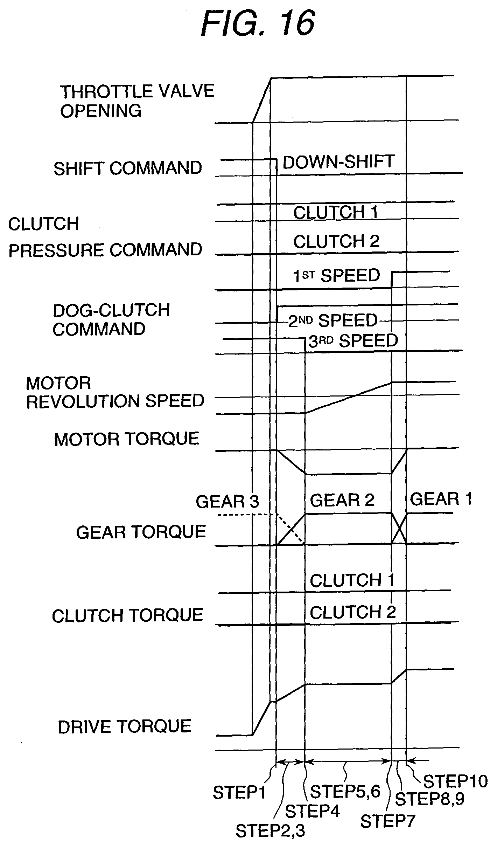

Fig. 8 shows flowchart of the controller system when conducting the skip shift. In Fig. 9 are shown conditions of the gear exchange and the torque transition, in the case of the up-shift $1 \to 3$, for example. The numbers (1)-(10) in Fig. 9 indicate the Step numbers shown in the Fig. 8, respectively. Fig. 10 shows time-chart showing the operation in the each Step when conducting the up-shift $1 \to 3$. Also, Fig. 16 is time-chart showing the operation in the each Step, but when conducting the down-shift $3 \to 1$. The operation of the down-shift is that, in which the operation of the up-shift is exchanged in the directions of the torque and the revolution speed, but in symmetric.

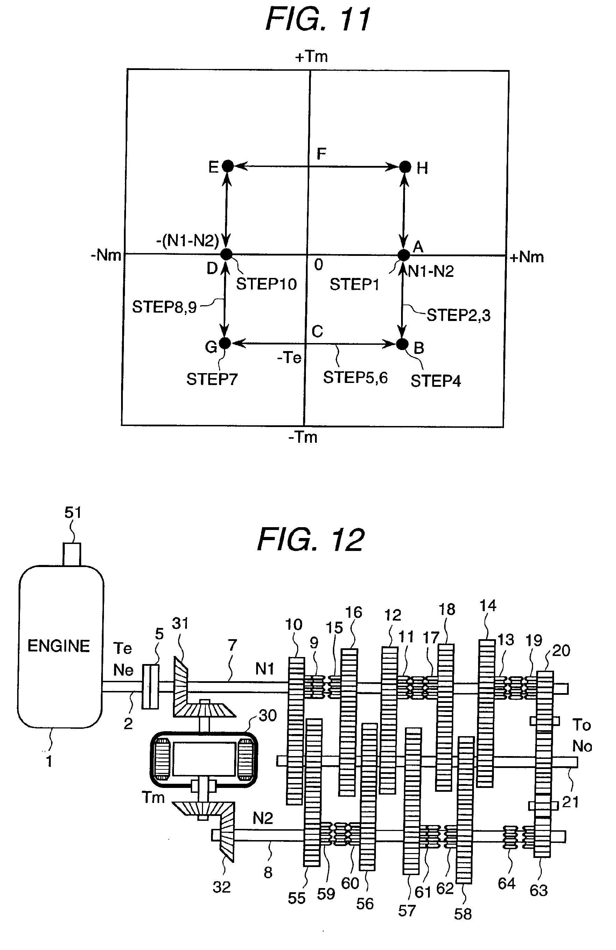

Further, Fig. 11 shows a torque-revolution speed characteristic indicative of the four-dimension operation points of the motor in a case of the up-shift $1 \to 3$, for example.

In Step 1, between the transmission gear at the present and the gear at the next-position, when a intermediate gear is connected, which gear is attached on the shaft at the opposite side, then the motor 30 rotates idly at the revolution speed (N1-N2). As the intermediate gear of the shaft on the opposite side, a second (2nd) speed gear may be selected in case of $1 \longleftrightarrow 3$ transmission, a fourth (4th) speed gear in case of $3 \longleftrightarrow 5$ transmission, the second (2nd) or the fourth (4th) speed gear in case of $1 \longleftrightarrow 5$, and a third (3rd) speed gear in case of $2 \longleftrightarrow 4$ transmission.

In Step 2, when the motor torque is increased by a predetermined rise-up rate, the input torque of the intermediate gear goes up while the input torque of the pre-position gear goes down. In the case of the up-shift $1 \to 3$, $3 \to 5$ or $1 \to 5$, the operation point of the motor lies at the point A in Fig. 11 just before the transmission or gear-shifting. Of course, since N1 and N2 differ depending upon combination of the pre-position gear and the intermediate gear, the value of revolution speed may differ, but it can be expressed by (N1-N2). Because of the torque transition from the shaft 7 to the shaft 8, the motor torque is increased in the negative direction, and then the operation point of the motor moves into the direction of the point B. In this instance, the input torque T2 of the transmission gear 16 or 18 goes up according to the (Equation 5) while the input torque T1 of the transmission gear 10 or 12 goes down according to the (Equation 4), and then they are T1 = 0 and T2 = Te when reaching to the point B, whereby establishing Tm=-Te. In the up-shift $2 \to 4$, when the 3rd speed gear is connected, the operation point of the motor lies at the point D in Fig. 11 just before the transmission, since N2 > N1. When the motor torque is increased in the positive direction, the operation point of the motor moves in the direction of the point E. The input torque T1 of the transmission gear 12 goes up according to the (Equation 7) while the input torque T2 of the transmission gear 16 goes down according to the (Equation 8), and then they are T1 = Te and T2 = 0 when reaching to the point D, whereby establishing Tm = Te. In the down-shift $4 \to 2$, the operation point of the motor moves from the point A to the point H. When the motor torque is increased in the positive direction, the input torque T1 of the transmission gear 12 goes up according to the (Equation 7) while the input torque T2 of the transmission gear 16 goes down according to the (Equation 8), and then they are T1 = Te and T2 = 0 when reaching to the point H, whereby establishing Tm = Te. In the down-shift $5 \to 3$ or $3 \to 1$, the operation point of the motor moves from the point D to the point G. When the motor torque is increased in the negative direction, the input torque T2 of the transmission gear 18 or 16 goes up according to the (Equation 5) while the input torque T1 of the transmission gear 14 or 12 goes down according to the (Equation 4), and then they are T1 = 0 and T2 = Te when reaching to the point G, whereby establishing Tm = -Te.

In Step 3, the transmission controller 33 makes an finish judgment of the torque phase. Though it determines whether the input torque of the pre-position gear comes to be zero (0) or not, however in many cases, since the input torque of the pre-position gear cannot be detected directly, therefore in the place thereof, it is possible to consider that the input torque of the pre-position gear = 0 when the effective torque of the motor comes to be equal to the engine torque in the absolute value thereof (i.e., Tm = |Te|). For that purpose, it is necessary to obtain the engine torque Te through detection or calculation thereof, but the detailed method of it was already shown, for example, in Japanese Patent Laid-Open Nos. Hei 5-240073 (1993) and Hei 6-317242 (1994), which were filed by the same present applicant, therefore it will be omitted herein.

In Step 4, the transmission controller 33 actuates the shift actuator of the pre-position, thereby to disconnect the pre-position gear. When the pre-position gear is disconnected, the engine revolution speed can be changed.

In Step 5, when the transmission controller 33 generates an instruction or command for motor revolution speed change, the engine revolution speed changes toward the input revolution speed of the next-position gear. This is the process of revolution speed transition, which is called by the inertia phase. In the up-shift, $1 \to 3$ or $3 \to 5$, when the motor revolution speed is decreased while keeping at Tm = -Te, the revolution speed of the shaft 7 falls down, but at the point C, changing over the rotation direction, and then rises up in the negative direction up to the point G. Though the operation point of the motor moves to the point C or F, whereby the motor revolution speed comes down to zero (0), in the cases of the Figs. 5, 6 and 7, however in the case of the Fig. 11, since reaching to the revolution speed of the next-position jumps over the revolution speed of the intermediate, the motor revolution speed changes from the positive to the negative, and then from the negative to the positive. In the up-shift, $2 \rightarrow 4$, when the motor revolution speed is decreased while keeping at Tm = Te, the revolution speed of the shaft 8 goes down. In this instance, the operation point of the motor moves from the point E to the point H. In the down-shift, $5 \rightarrow 3$ or $3 \rightarrow 1$, when the motor revolution speed is decreased while keeping at Tm = Te, the revolution speed of the shaft 8 goes up. In this instance, the operation point of the motor moves from the point H to the point E. In the down-shift, $4 \rightarrow 2$, when the motor revolution speed is decreased while keeping at Tm = -Te, the revolution speed of the shaft 7 goes up. In this instance, the operation point of the motor moves from the point G to the point B.

In Step 6, though the transmission controller 33 makes an finish judgment on the inertia phase, but it is decided upon the basis of the fact that the engine revolution speed comes to be equal to that of the input revolution speed of the next-position gear.

In Step 7, the transmission controller 33 actuates the clutch actuator, thereby connecting or jointing the dog-clutch of the next-position.

In Step 8, when the transmission controller 33 generates an instruction or command for motor torque reduction, thereby bringing the motor torque down to zero (0), the engine torque Te, being transmitted through the motor 30 to the intermediate gear, is shifted to the next-position gear. In this instance, the operation point of the motor moves from the points B, G, E and H to the point A or D, in Fig. 11.

In Step 9, the transmission controller 33 makes the judgment on the end of the second torque phase upon the basis of the fact that the motor torque Tm comes down to zero (0).

In Step 10, the transmission controller 33 actuates the shift actuator so as to disconnect the intermediate gear, thereby completing the skip shift.

In general, it is said that gear shifting is impossible between the transmission gear trains belonging to the same clutch, thus, such as the skip shift, in the twin-clutch transmission gear, however according to the method of the present embodiment, since the torque is transferred or shifted by the means of the motor, various operation modes can be practiced, including such the skip shift, thereby improving the drivability very much.

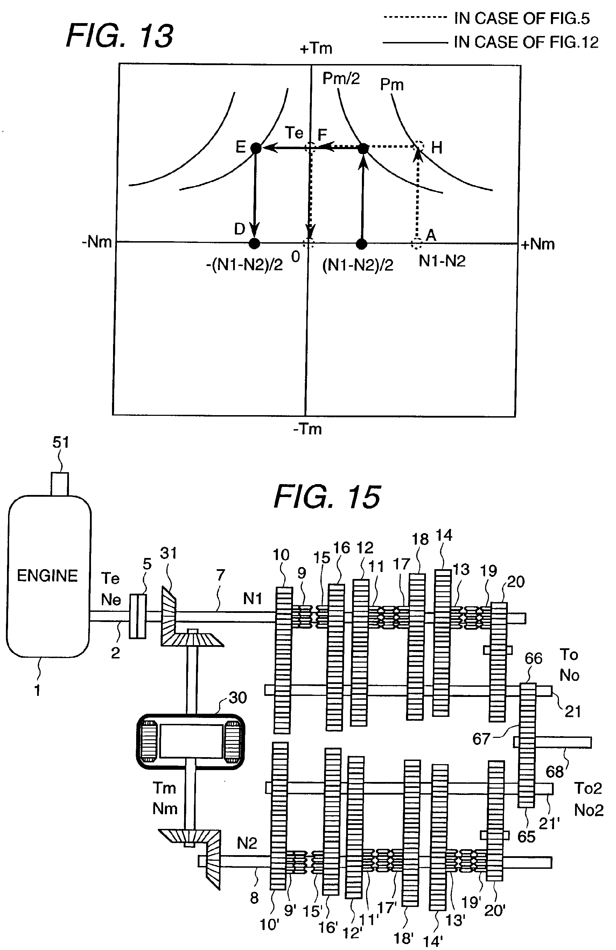

Fig. 12 is the structural view of the transmission system, showing a second embodiment according to the present invention. In this embodiment, differing from that shown in the Fig. 2, the transmission gears, i.e., the $1^{st}$ - $5^{th}$ speed gears and the back gear are provided on the shaft 7. In this case, the second clutch is not always needed. Though being possible various controls with it, however the second clutch may be omitted for the purpose of cost reduction. Accordingly, also the clutch connection gears 3 and 4 may be omitted accompanying with it.

On the shaft 8 are provided assist gears 55, 56, 57 and 58, each having the gear ratio corresponding to $1.5^{th}$ speed, $2.5^{th}$ speed, $3.5^{th}$ speed and $4.5^{th}$ speed, respectively. As shown in the figure, positioning or arranging them among the $1^{st}$-$5^{th}$ speed gears brings about no extending of the transmission in the total length thereof. Those assist gears are connected to the shaft 8 by the means of dog-clutches 59, 60, 61 and 62. Though the back assist gear 63 and the dog-clutch gear 64 thereof are also shown herein, however they are not always needed. However, much more various control can be obtained with them.

The transmission control shown in Fig. 12 can be controlled by an algorithm being completely same to that of the skip shift explained by referring to the Figs. 8 to 11. Herein, the $1 \rightarrow 3$ transmission should be changed to $1 \rightarrow 2$ transmission, and as the intermediate, the 2nd position speed be replaced by $1.5^{th}$ speed, only. The operation in the torque transition/revolution speed transition is shown in Fig. 13, when changing gear $1 \rightarrow 2$ by means of the motor. This operation is, from another viewpoint, equivalent to that the 5 speed transmission shown in the Fig. 2 or 3 is expanded to the 9 speed transmission, in which the gear can be changed by a unit of half step and the skip shift is conducted always. However, with doing so, it is possible to obtain a great effect, as will be mentioned below.

When calculating out the motor output necessary at the time when changing the gears, the revolution speed before the transmission or gear change is (N1-N2) or -(N1-N2), and it is necessary to transmit torque same to the engine torque, therefore it can be expressed by the following equation.

$$Pm = |N1-N2|*Te \qquad \text{(Equation 10)}$$

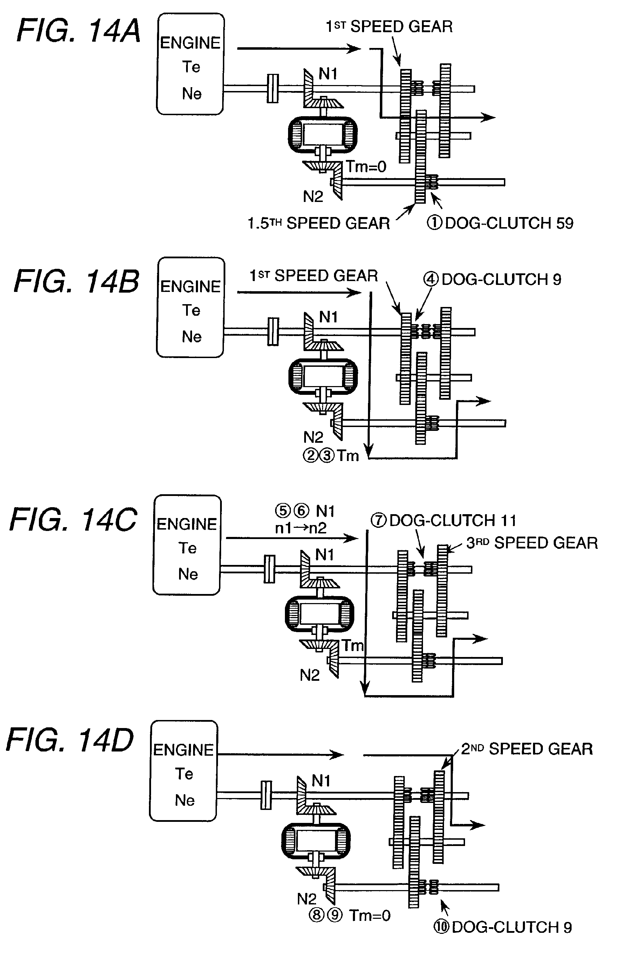

Accordingly, if making |N1-N2| small, it is possible to use a motor of small capacity. With the structure shown in Fig. 12, |N1-N2| is the difference of 0.5 speed, being almost a half (1/2) comparing to the transmission shown in the Fig. 2 or 3, therefore the motor capacity is enough to be about a half (1/2). This is shown by motor characteristics shown in Fig. 14. For example, the change in motor revolution speed, which is caused when shifting gear $1 \rightarrow 2$, lies from the input revolution speed difference between 1st position speed and 2nd position speed, i.e., (N1-N2), up to zero (0), in the case shown in the Fig. 5, however in the case shown in Fig. 12, it changes from the input revolution speed difference between 1st position speed and $1.5^{th}$ speed, i.e., (N1 - N2 = +0.5 speed), up to the input revolution speed difference

between 1.5th speed and 2nd position speed, i.e., (N1 - N2 = -0.5 speed). Accordingly, width of the revolution speed change is same to that in the case of the sequential transmission or gear-shifting shown in the Fig. 5. However, as be seen from Fig. 14, output lines at the points B, G, E and H are enough to be about a half (1/2) of those in the case shown in the Fig. 5. In other words, by selecting the gear ratio of the intermediate, so that it comes to be just a half (1/2) of the input revolution speed difference between the pre-position and the rear-stage gears, the motor capacitor comes down to a half (1/2). Even with the structure in which the gear ratio of the intermediate does not come to be just a half (1/2), it is also possible to obtain such the effect as mentioned above, to a certain extent.

With this method, only one clutch is enough to be connected to the engine, therefore it obtains a great effect in the cost reduction.

Fig. 15 is the structural view of the transmission system, showing a third embodiment according to the present invention. In this system, the transmission gears of the shafts 7 and 8 are completely same to those shown in the above. Therefore, the references attached thereto are the same, but attached with dash or prime ('). The gear trans of the output shafts 21 and 21' driven by them are also same to those shown in the above. The output shaft 21 and an added output shaft 21' are connected to a final gear 67 through gears 65 and 66, being different in the gear ratio thereof. By selecting the final gear ratio of the output shaft 21' to be smaller than the final gear ratio of the output shaft 21, the transmission gear 10' comes to the gear ratio corresponding to the 1.5th speed, and also the transmission gears 16', 12', 18' and 14' to the gear ratios corresponding to 2.5th speed, 3.5th speed, 4.5th speed and 5.5th speed, respectively.

The transmission control can be conducted in the totally same manner as shown in the Figs. 12 and 13.

With this present method, in the same manner to the case shown in the Fig. 12, it is equivalent to that at the 10 speed transmission is constructed by a unit of 0.5th speed and it always carries out the skip shift, and then the motor capacity is enough to be a half (1/2) of the case shown in the Fig. 3. Moreover, according to the present method, there is no necessity of designing the transmission gears of 1.5th speed - 5.5th speed, newly, but it is enough to provide two (2) sets of the conventional gear trains, therefore the cost for development can be reduced greatly, and also because of no necessity of providing new machining tools or facility for the new gear trains, thereby obtaining a great effect in the cost reduction.

Furthermore, all the dog-clutches are provided on the shafts 7 and 8 in the Fig. 15, but dividing the output shaft into 21 and 21' results in that all the dog-clutches must not provided on the input side. For example, if the dog-clutches 9 and 15 for use in 1-2 speed gear change is provided on the side of the output shaft 21, designing of the positions for the shift forks can be done without difficulty, thereby increasing freedom in designing thereof.

According to the present invention, the skip shift can be made practicable, though being impossible according the conventional twin clutch transmission mechanism, therefore it is possible to improve the drivability. Also, in the case of provision of the intermediate gear by a unit of 0.5 speed, the motor capacity can be reduced down to about a half (1/2) thereof. And also, only one (1) piece of clutch is enough, thereby an economic effect can be obtained.

**Claims**

1.   An automatic transmission (48) for use in an automobile (47), comprising:

    a clutch for transmitting or cutting off an output of an internal combustion engine (1) ;
    a first input shaft being connected to said clutch;
    first transmission gear trains provided on said first input shaft, each being releasable;
    a second input shaft;
    second transmission gear trains provided on said second input shaft, each being releasable;
    an output shaft (21) provided with driven gear trains to be connected to said first transmission gear trains and said second transmission gear trains; and
    a motor (30) for applying torque between said first input shaft and said second input shaft, relatively.

2.   An automatic transmission (48) for use in an automobile (47), comprising:

    a clutch for transmitting or cutting off an output of an internal combustion engine (1);
    a first input shaft being connected to said clutch;
    first transmission gear trains provided on said first input shaft, each being releasable;
    a first output shaft provided with driven gear trains to be connected to said first transmission gear trains;
    a second input shaft;
    second transmission gear trains provided on said second input shaft, each being releasable;
    a second output shaft being with driven gear trains to be connected to said second transmission gear trains;
    a differential gear (49) connected to a wheel driving shaft;

a first final gear provided on said first output shaft, to be meshed with said differential gear;
a second final gear provided on said second output shaft, to be meshed with said differential gear; and
a motor (30) for applying torque between said first input shaft and said second input shaft, relatively.

3. An automatic transmission (48) for use in an automobile (47), as described in the claim 2, wherein
said second final gear provided on said second output shaft to be meshed with said differential gear is smaller in gear ratio than said first final gear.

4. An automatic transmission (48) for use in an automobile (47), as described in any one of the claims 1 to 3, further comprising:

a differential gear provided between said first input shaft and said second input shaft, wherein a third shaft of said differential gear is connected said motor (30).

5. An automatic transmission (48) for use in an automobile (47), as described in any one of the claims 1 to 3, further comprising:

a planetary gear (41), wherein a first shaft of said planetary gear (41) is connected to said first input shaft, a second shaft of said planetary gear (41) to said second input shaft, and a third shaft of said planetary gear (41) to said motor (30).

6. An automatic transmission (48) for use in an automobile (47), as described in any one of the claims 1 to 5, wherein a gear ratio of said second transmission gear trains is determined to be an intermediate of a gear ratio of said first transmission gear trains.

7. An automatic transmission (48) for use in an automobile (47), as described in any one of the claims 1 to 5, wherein a gear ratio of said second transmission gear trains is to be determined, so that revolution speed of the second input shaft by said second transmission gear trains comes close to an average value of revolution speed of the first input shaft by gears of a front-stage and a rear-stage of said first transmission gear trains.

8. A controller apparatus for an automatic transmission (48), for controlling the automatic transmission (48), comprising, a clutch for transmitting or cutting off an output of an internal combustion engine (1); a first input shaft being connected to said clutch; first transmission gear trains provided on said first input shaft, each being releasable; a second input shaft; second transmission gear trains provided on said second input shaft, each being releasable; an output shaft provided with driven gear trains to be connected to said first transmission gear trains and said second transmission gear trains; and a motor (30) for applying torque between said first input shaft and said second input shaft, relatively, wherein:

connecting a second transmission gear of said second transmission gear trains during when driving by a first transmission gear of said first transmission gear trains;
reducing transmission torque of said first transmission gear by increasing said second input shaft torque by said motor (30) ;
releasing said first transmission gear when the transmission torque of said first transmission gear comes down to about zero (0);
approaching revolution speed of said first input shaft to revolution speed of a third transmission gear among said first transmission gear trains gradually, while maintaining the torque of said second input shaft by said motor (30); and
connecting said third transmission gear onto the first input shaft at a time when said input shaft and said third transmission gear are synchronized with, and releasing said second transmission gear by bringing torque generated by said motor to be zero (0).

9. A controller apparatus for an automatic transmission (48), for controlling the automatic transmission (48), comprising, a clutch for transmitting or cutting off an output of an internal combustion engine (1); a first input shaft being connected to said clutch; first transmission gear trains provided on said first input shaft, each being releasable; a first output shaft provided with driven gear trains to be connected to said first transmission gear trains; a second input shaft; second transmission gear trains provided on said second input shaft, each being releasable; a second output shaft being with driven gear trains to be connected to said second transmission gear trains; a differential gear connected to a wheel driving shaft; a first final gear provided on said first output shaft, to be meshed with said differential gear; a second final gear provided on said second output shaft, to be meshed with said differential gear; and a motor for applying torque between said first input shaft and said second input shaft, relatively, wherein:

connecting a second transmission gear of said second transmission gear trains during when driving by a first transmission gear of said first transmission gear trains;

reducing transmission torque of said first transmission gear by increasing said second input shaft torque by said motor (30) ;

releasing said first transmission gear when the transmission torque of said first transmission gear comes down to about zero (0) ;

approaching revolution speed of said first input shaft to revolution speed of a third transmission gear among said first transmission gear trains gradually, while maintaining the torque of said second input shaft by said motor (30); and

connecting said third transmission gear onto the first input shaft at a time when said input shaft and said third transmission gear are synchronized with, and bringing torque generated by said motor to be zero (0), thereby releasing said second transmission gear.

10. An automobile (47) having an internal combustion engine (1), an automatic transmission (48), and a controller apparatus for controlling said internal combustion engine

(1) and said automatic transmission (48), wherein,
   said automobile (47), comprises:

a clutch for transmitting or cutting off an output of an internal combustion engine; a first input shaft being connected to said clutch; first transmission gear trains provided on said first input shaft, each being releasable; a second input shaft; second transmission gear trains provided on said second input shaft, each being releasable; an output shaft provided with driven gear trains to be connected to said first transmission gear trains and said second transmission gear trains; and a motor (30) for applying torque between said first input shaft and said second input shaft, relatively; and

said controller apparatus, comprises:

connecting a second transmission gear of said second transmission gear trains during when driving by a first transmission gear of said first transmission gear trains; reducing transmission torque of said first transmission gear by increasing said second input shaft torque by said motor (30); releasing said first transmission gear when the transmission torque of said first transmission gear comes down to about zero (0); approaching revolution speed of said first input shaft to revolution speed of a third transmission gear among said first transmission gear trains gradually, while maintaining the torque of said second input shaft by said motor (30); and connecting said third transmission gear onto the first input shaft at a time when said input shaft and said third transmission gear are synchronized with, and bringing torque generated by said motor (30) to be zero (0), thereby releasing said second transmission gear.

11. An automobile (47) having an internal combustion engine (1), an automatic transmission (48), and a controller apparatus for controlling said internal combustion engine (1) and said automatic transmission (48), wherein,
   said automobile (47), comprises:

a clutch for transmitting or cutting off an output of an internal combustion engine; a first input shaft being connected to said clutch; first transmission gear trains provided on said first input shaft, each being releasable; a first output shaft provided with driven gear trains to be connected to said first transmission gear trains; a second input shaft; second transmission gear trains provided on said second input shaft, each being releasable; a second output shaft being with driven gear trains to be connected to said second transmission gear trains; a differential gear connected to a wheel driving shaft; a first final gear provided on said first output shaft, to be meshed with said differential gear; a second final gear provided on said second output shaft, to be meshed with said differential gear; and a motor (30) for applying torque between said first input shaft and said second input shaft, relatively,

said controller apparatus, comprises:

connecting a second transmission gear of said second transmission gear trains during when driving by a first transmission gear of said first transmission gear trains; reducing transmission torque of said first transmission gear by increasing said second input shaft torque by said motor (30); releasing said first transmission gear when the transmission torque of said first transmission gear comes down to about zero (0); approaching revolution speed of said first input shaft to revolution speed of a third transmission gear among said first transmission gear trains gradually, while maintaining the torque of said second input shaft by said motor (30); and connecting said third transmission gear onto the first input shaft at a time when said input shaft and said third transmission gear are synchronized with, and bringing torque generated by said motor (30) to be zero (0), thereby releasing said second transmission gear.

**12.** An automatic transmission (48), comprising:

a transmission input shaft (7), being provided with first gear trains thereon, onto which an output of an internal combustion engine (1) is transmitted through a first friction clutch;
a transmission assist shaft (8), being provided with second gear trains thereon;
a counter shaft (21), being provided with third gear trains thereon, to be meshed with said first gear trains and said second gear trains; and
a motor (30) provided between said transmission input shaft (7) and said transmission assist shaft (8).

**13.** An automatic transmission (48), comprising:

a transmission input shaft (7), being provided with first gear trains thereon, onto which an output of an internal combustion engine (1) is transmitted through a first friction clutch;
a first counter shaft, being provided with first counter gear trains thereon, to be meshed with said first gear trains;
a transmission assist shaft (8), being provided with second gear trains thereon;
a second counter shaft, being provided with second counter gear trains thereon, to be meshed with said second gear trains;
a transmission output shaft, to be meshed with said each counter shaft through at least one of said each counter gear trains; and
a motor (30) provided between said transmission input shaft (7) and said transmission assist shaft (8).

**14.** An automatic transmission (48), as defined in the claim 13, wherein
said each one of the gears is different from in a gear ratio.

**15.** An automatic transmission (48), as defined in any one of the claims 12 to 14, wherein
said motor (30) is connected with said transmission input shaft (7) and said transmission assist shaft (8) through a differential gear.

**16.** An automatic transmission (48), as defined in any one of the claims 12 to 14, further comprising:

a planetary gear (41) is provided, wherein
a first shaft of said planetary gear is connected to said transmission input shaft (7);
a second shaft of said planetary gear is connected to said transmission assist shaft (8); and
a third shaft of said planetary gear is connected to said motor (30).

**17.** An automatic transmission (48), as defined in any one of the claims 12 to 16, wherein
gear ratio of said second gear trains is determined to be around an intermediate of gear ratio of said first gear trains.

**18.** A controller apparatus for an automatic transmission (48), for controlling the automatic transmission (48), comprising, a transmission input shaft (7), being provided with first gear trains thereon, onto which an output of an internal combustion engine (1) is transmitted through a first friction clutch; a transmission assist shaft (8), being provided with second gear trains thereon; a counter shaft (21), being provided with third gear trains thereon, to be meshed with said first gear trains and said second gear trains; and a motor (30) provided between said transmission input shaft (7) and said transmission assist shaft (8), wherein
in a case where said transmission (48) is driven through engagement of a first gear within said first gear trains, and when shifting is conducted through engagement of a second gear of said second gear trains while releasing the first gear:

reducing transmission torque of said first gear while increasing torque of said transmission assist shaft (8) by said motor (30) ;

releasing said first gear at a time when the transmission torque of said first gear is equal or less than a first value; adjusting difference between the revolution speed of said transmission input shaft (7) and the revolution speed of the third gear by said motor (30); and

engaging said third gear with said transmission input shaft (7) when said difference of revolution speed is equal or less than a second value, and bringing torque generated by said motor (30) to zero (0), thereby releasing said second gear.

19. A controller apparatus for an automatic transmission (48), for controlling the automatic transmission (48), comprising, a transmission input shaft (7), being provided with first gear trains thereon, onto which an output of an internal combustion engine (1) is transmitted through a first friction clutch; a first counter shaft, being provided with first counter gear trains thereon, to be meshed with said first gear trains; a transmission assist shaft (8), being provided with second gear trains thereon; a second counter shaft, being provided with second counter gear trains thereon, to be meshed with said second gear trains; a transmission output shaft, to be meshed with said each counter shaft through at least one of said each counter gear trains; and a motor (30) provided between said transmission input shaft and said transmission assist shaft (8), wherein

in a case where said transmission (48) is driven through engagement of a first gear within said first gear trains, and when shifting is conducted through engagement of a second gear of said second gear trains while releasing the first gear:

reducing transmission torque of said first gear while increasing torque of said transmission assist shaft (8) by said motor (30) ;

releasing said first gear at a time when the transmission torque of said first gear is equal or less than a first value; adjusting difference between the revolution speed of said transmission input shaft (7) and the revolution speed of the third gear by said motor (30); and

engaging said third gear with said transmission input shaft (7) when said difference of revolution speed is equal or less than a second value, and bringing torque generated by said motor (30) to zero (0), thereby releasing said second gear.

# FIG. 1

# FIG. 2

# FIG. 3

51

3  5  31  7  N1  10  9  11  12  14  13

ENGINE

Te
Ne

Tm  30

2

1

4  6  32  N2  8  15  16  17  18  20  19

To
No

21

# FIG. 5

+Tm

Te  F

E  H

-(N1-N2)

-Nm  +Nm

D  0  A
N1-N2

G  C  B

-Tm

## FIG. 4

VEHICLE SPEED

ACCELERATOR
PEDAL OPENING

SELECT RANGE
SIGNAL

33

CLUTCH PRESSURE
COMMAND

DOG-CLUTCH
ACTUATOR FORCE
COMMAND

ENGINE TORQUE
DECREASING
DEMAND

ACTUAL
REVOLUTION
SPEED

ACTUAL
TORQUE

TORQUE
REFERENCE

REVOLUTION
SPEED
REFERENCE

36

ROTOR
ANGLE

CURRENT

35

37    37    37

38    38    38

38    38    38

37    37    37

U    V    W

34

39

30

## FIG. 6

START

STEP 1 — CONNECT NEXT-POSITION GEAR

STEP 2 — INCREASE MOTOR TORQUE

STEP 3 — 1ST TORQUE PHASE FINISH JUDGMENT $Tm-|Te|$ ?
NO
YES

STEP 4 — DISCONNECT PRE-POSITION GEAR

STEP 5 — DECREASE MOTOR REVOLUTION SPEED

STEP 6 — INERTIA PHASE FINISH JUDGMENT $Nm=0$?
NO
YES

STEP 7 — CONNECT NEXT GEAR

STEP 8 — DECREASE MOTOR TORQUE

STEP 9 — 2ND TORQUE PHASE FINISH JUDGMENT $Nm=0$?
NO
YES

STEP 10 — DISCONNECT PRE-POSITION CLUTCH

END

# FIG. 7A  FIG. 7B

*FIG. 8*

STEP 1

STEP 2

STEP 3

STEP 4

STEP 5

STEP 6

STEP 7

STEP 8

STEP 9

STEP 10

START

CONNECT
INTERMEDIATE GEAR

INCREASE
MOTOR TORQUE

1ST TORQUE
PHASE FINISH
JUDGEMENT
Tm-|Te| ?

NO

YES

DISCONNECT
INTERMEDIATE GEAR

CHANGE MOTOR
REVOLUTION SPEED

INERTIA
PHASE FINISH
JUDGMENT Nm=N
(NEXT POSITION)-N
(INTERMEDIATE
POSITION)?

NO

YES

CONNECT
NEXT GEAR

DECREASE
MOTOR TORQUE

2ND TORQUE
PHASE FINISH
JUDGMENT
Tm=0?

NO

YES

DISCONNECT
INTERMEDIATE GEAR

END

*FIG. 9A*

1ST SPEED GEAR

ENGINE
Te
Ne

N1

Tm=0

N2

2ND SPEED GEAR

①DOG-CLUTCH 15

*FIG. 9B*

1ST SPEED GEAR

④DOG-CLUTCH 9

ENGINE
Te
Ne

N1

N2

②③Tm

*FIG. 9C*

⑤⑥ N1
n1→n3

⑦DOG-CLUTCH 11

3RD SPEED GEAR

ENGINE
Te
Ne

Tm

N2

*FIG. 9D*

3RD SPEED GEAR

ENGINE
Te
Ne

N1

N2

⑧⑨ Tm=0

⑩DOG-CLUTCH 15

# FIG. 10

THROTTLE VALVE
OPENING

SHIFT COMMAND — UP-SHIFT

CLUTCH
PRESSURE COMMAND

CLUTCH 1

CLUTCH 2

DOG-CLUTCH
COMMAND

1ST SPEED

2ND SPEED

3RD SPEED

MOTOR
REVOLUTION SPPED

MOTOR TORQUE

GEAR 1    GEAR 2    GEAR 3

GEAR TORQUE

CLUTCH TORQUE

CLUTCH 1

CLUTCH 2

DRIVE TORQUE

STEP1
STEP2,3
STEP4
STEP5,6
STEP7
STEP8,9
STEP10

## FIG. 11

## FIG. 12

*FIG. 13*

········· IN CASE OF FIG.5
———— IN CASE OF FIG.12

+Tm

Pm/2     Pm

Te   F                    H
E ←——————— ←—————

D                    A
-Nm ————————————————————————— +Nm
-(N1-N2)/2  0  (N1-N2)/2   N1-N2

-Tm

51

*FIG. 15*

ENGINE    Te    5   31    7    N1
          Ne                       10  9  15 16 12 11 17 18 14 13 19 20

          2                        To
                                   No

          30                       21

          Tm                       66
          Nm                       67

          N2                       68

          8                        To2
                                   No2

          9' 15'        11' 17'         19' 20'
          10' 16' 12'  18' 14' 13'     21' 65

FIG. 14A

ENGINE
Te
Ne

N1

Tm=0

N2

1ST SPEED GEAR

1.5TH SPEED GEAR     ①DOG-CLUTCH 59

FIG. 14B

ENGINE
Te
Ne

N1

N2

②③Tm

1ST SPEED GEAR     ④DOG-CLUTCH 9

FIG. 14C

ENGINE
Te
Ne

⑤⑥ N1
n1→n2

N1

Tm

N2

⑦DOG-CLUTCH 11

3RD SPEED GEAR

FIG. 14D

ENGINE
Te
Ne

N1

N2

⑧⑨ Tm=0

2ND SPEED GEAR

⑩DOG-CLUTCH 9

# FIG. 16

THROTTLE VALVE OPENING

SHIFT COMMAND — DOWN-SHIFT

CLUTCH PRESSURE COMMAND — CLUTCH 1 / CLUTCH 2

DOG-CLUTCH COMMAND — 1ST SPEED / 2ND SPEED / 3RD SPEED

MOTOR REVOLUTION SPEED

MOTOR TORQUE

GEAR TORQUE — GEAR 3 / GEAR 2 / GEAR 1

CLUTCH TORQUE — CLUTCH 1 / CLUTCH 2

DRIVE TORQUE

STEP1  STEP2,3  STEP4  STEP5,6  STEP7  STEP8,9  STEP10